# DEMANDE DE BREVET EUROPEEN

(11) **EP 4 030 444 A1**
(43) Date de publication de la demande: **20.07.2022**
(21) Numéro de dépôt: 21306896.8
(22) Date de dépôt: 22.12.2021
(51) Int. Cl.: H01B 7/00, H01B 7/29, H01B 9/00, B32B 1/08, B32B 3/08, B32B 3/30, B32B 5/02, B32B 15/12, B32B 15/14, B32B 27/28, B32B 27/32, B32B 27/40, B32B 29/00

(54) **CÂBLE ARMÉ RÉSISTANT AU FEU AVEC UNE LIMITATION DE LA PROJECTION DE MATIÈRES INCANDESCENTES**

(30) Priorité: 14.01.2021 FR 2100323
(71) Demandeur: Nexans, 92400 Courbevoie (FR)
(72) Inventeur: GYPPAZ, Franck, 69003 LYON (FR); AUVRAY, Thierry, 69006 LYON (FR)
(74) Mandataire: Ipsilon

(57) **Abrégé**

La présente invention concerne un câble armé comprenant un cœur de câble incluant au moins un élément électriquement conducteur allongé revêtu par une couche isolante, et au moins une armure métallique cylindrique autour dudit cœur de câble, caractérisé en ce que :
- le câble comporte, au sein de l'espace interne de l'armure métallique, au moins un canal permettant à un gaz de circuler tout au long dudit espace interne ; et
- l'armure métallique est revêtue extérieurement par une couche composite à base d'un matériau géopolymère.

## Description

La présente invention a trait au domaine des câbles armés, à savoir des câbles comprenant au moins un élément électriquement conducteur allongé (constituant le « cœur » dudit câble) et au moins une armure métallique entourant ledit élément électriquement conducteur allongé.

L'invention concerne plus précisément un câble de ce type qui, lorsqu'il est soumis à de hautes températures, typiquement dans les conditions d'un incendie, conduit à une projection réduite voire nulle de matières incandescentes de type gouttelettes ou particules enflammées vers l'extérieur du câble.

L'invention s'applique notamment, mais non exclusivement, à des câbles armés destinés au transport d'énergie et/ou à la transmission de donnée, en particulier pour un emploi dans les bâtiments et ouvrages de génie civil où la nécessité de limiter la projection de matières incandescentes lors d'un incendie est au moins souhaitable sinon primordiale, et notamment les habitations, les établissements recevant du public (ERP), et les tunnels, en particulier routiers et ferroviaires.

La plupart des câbles armés ont des propriétés assez médiocres de résistance au feu pour ce qui est de la génération et projection de matières incandescentes, notamment de gouttelettes enflammées ou d'autres particules.

En particulier, peu de câbles armés peuvent être classifiés dans les catégories dite d0 et d1 lorsqu'ils sont testés selon la norme européenne EN50399, ces catégories d0 et d1 correspondant respectivement aux cas favorables où : aucune gouttelette ou particule enflammée n'est émise (classe d0), ou bien ou des gouttelettes ou particules sont émises avec une persistance inférieure à 10 secondes (classe d1).

Pour la plupart, les câbles armés font partie de la classe d2 selon la norme EN50399, avec des gouttelettes et/ou particules émises avec une persistance de plus de 10 secondes.

Un but de la présente invention est de fournir des câbles armés améliorés, pour lesquelles la génération de gouttelettes ou de particules est réduite, et de préférence totalement inhibée, lorsque le câble est soumis à des températures élevées, notamment dans les conditions d'un incendie. Selon un aspect particulier, l'invention vise à fournir des câbles armés répondant aux exigences des classes d0 et d1 au sens de la norme EN50399.

A cet effet, la présente invention propose d'employer un câble armé spécifique, dans lequel (1) l'espace interne de l'armure a une compacité réduite ; et (2) l'armure est revêtue extérieurement par un ruban de matériau fibreux imprégné avec une composition géopolymère.

Plus précisément, la présente invention a pour objet un câble armé comprenant un cœur de câble incluant au moins un élément électriquement conducteur allongé revêtu par une couche isolante, et au moins une armure métallique cylindrique autour dudit cœur de câble, caractérisé en ce que :
- le câble comporte, au sein de l'espace interne de l'armure métallique, au moins un canal permettant à un gaz de circuler tout au long dudit espace interne ; et
- l'armure métallique est revêtue extérieurement par une couche composite à base d'un matériau géopolymère, qui est de préférence (et le plus souvent) obtenue par enroulement d'un ruban de matériau fibreux imprégné avec une composition géopolymère autour de l'armure.

Par "espace interne" de l'armure métallique, on entend, au sens de la présente description, la zone comprise à l'intérieur du cylindre que constitue l'armure. Cet espace interne contient le cœur de câble mais doit néanmoins permettre la circulation d'un gaz et la structure du câble au sein de l'espace interne.

La structure du câble sous l'armure métallique présente à cet effet une compacité réduite, avec des vides permettant une libre circulation d'un gaz, dont des exemples d'architecture bien adaptées sont donnés ci-après.

Le revêtement extérieur de l'armure métallique est, au contraire et par définition, en dehors de l'espace interne de l'armure métallique. Le ruban de matériau fibreux imprégné avec une composition géopolymère est typiquement, bien que non nécessairement, revêtu directement sur la surface externe de l'armure.

Compte tenu de sa structure spécifique, un câble selon l'invention présente notamment deux avantages qui, ensemble, induisent un effet marqué d'inhibition de la génération de gouttelettes ou de particules incandescentes lorsque le câble est soumis à des températures élevées, à savoir :
(i) la présence d'un canal capable de véhiculer un gaz au sein de l'espace interne de l'armure métallique (dit ci-après « canal de drainage ») permet d'éviter la formation d'une surpression interne :
   Les constituants d'un câble armé situés sous l'armure comprennent des composés qui tendent à fondre et à se décomposer au bout de quelques minutes lorsque le câble est soumis à des conditions de températures élevées, notamment dans les conditions d'un incendie.

Ces processus de fusion et décomposition induisent la formation de liquides et de gaz dans l'espace interne de l'armure, qui sans la présence spécifique du canal de drainage induirait l'échappement de liquide et/ou gaz transversalement vers l'extérieur du câble, avec projection de gouttelettes enflammées ou autres particules incandescentes.

Les constituants internes du câble armé qui sont ainsi susceptibles de fondre et se décomposer à haute température sont notamment les polymères constitutifs de la couche isolante qui revêt le ou les éléments conducteurs allongés présents dans le cœur du câble. Typiquement le cœur d'un câble armé contient en outre au moins une gaine qui entoure le ou les éléments conducteurs allongés revêtus d'une couche isolante ; et, le plus souvent, au moins un bourrage (dit « bedding » ou « filler » en anglais, qui peut typiquement entourer les conducteurs allongés isolé), la gaine et le bourrage étant également tous deux à base de matériaux (typiquement des polymère) susceptibles de fondre et se décomposer à haute température.

Comme illustré dans les exemples donnés ci-après, un câble selon l'invention présente l'avantage de ne pas conduire aux effets de surpression observés avec des câbles non pourvus d'un canal de drainage (avec des câbles non pourvus de canal de drainage, on observe typiquement un échappement de matière liquide au travers de l'armure, voire, si l'armure est suffisamment hermétique, une explosion de l'armure avec le cas échéant projection et chute de matière enflammée, ce qui classe dans les deux cas le câble en catégorie d2 selon la norme EN50399)
(ii) le revêtement extérieur de l'armure renforce l'armure et améliore son herméticité :
Le revêtement à base de matériau géopolymère qui entoure l'armure dans un câble selon l'invention assure une étanchéité accrue de l'armure, et ce y compris dans des conditions de températures élevées, notamment dans les conditions d'un incendie. C'est tout particulièrement le cas lorsque le revêtement est obtenu à partir d'un ruban imprégné, les conditions de température ne dégradant pas les propriétés étanchéifiantes du ruban.

Ainsi, dans un câble selon l'invention, les liquides et gaz issus de la dégradation interne du câble sous l'effet de la température tendent à rester sensiblement cloisonnés au sein du câble, avec des fuites transversales de produits de dégradation vers l'extérieur du câble qui sont extrêmement minimisés.

Différents aspects et modes de réalisation possibles de l'invention sont décrits plus en détails ci-après.

### Le cœur du câble armé

Les constituants du cœur de câble situé sous l'armure contiennent au moins un élément conducteur allongé revêtu par une couche isolante. Typiquement le cœur de câble comprend plusieurs éléments conducteurs de ce type, chacun revêtu par une couche isolante. Une gaine entoure en général ce ou ces éléments conducteurs allongés isolés. Optionnellement et de préférence, un bourrage est présent sous cette gaine, ledit bourrage entourant les éléments conducteurs.

Typiquement, le cœur de câble selon l'invention est constitué uniquement d'un ou plusieurs éléments conducteurs allongés revêtus d'une couche isolante, typiquement emprisonné(s) dans une gaine, avec avantageusement un bourrage autour des éléments conducteurs sous la gaine.

La couche isolante est typiquement une couche à base d'au moins un polymère susceptible de fondre et de se dégrader dans les conditions d'un incendie. De même la gaine et le bourrage comprennent en général un matériau susceptible de fondre et de se dégrader dans les conditions d'un incendie.

### Le canal permettant la circulation de gaz

Le canal de drainage permettant la circulation de gaz au sein de l'espace interne de l'armure peut prendre différentes formes, sous réserve qu'il permette un drainage efficace des gaz générés par la décomposition lorsque le câble est soumis à des conditions de température induisant cette composition, par exemple dans les conditions d'un incendie. Ce canal de drainage est de préférence localisé entre le cœur de câble et l'armure.

De façon avantageuse, un canal de drainage entre le cœur de câble et l'armure peut être obtenu en employant une armure ayant un diamètre interne plus élevé que celui du cœur de câble qu'il contient. Selon ce mode de réalisation, il existe entre l'armure et le cœur un espace vide continu s'étendant tout le long du câble sous l'armure, qui constitue ainsi un canal permettant le drainage des produits de décomposition et notamment des gaz en inhibant l'apparition de surpressions.

Selon une première variante, l'armure est placée de façon non ajustée autour du câble, à savoir avec un jeu entre l'armure et le cœur. Selon cette variante, la différence entre le diamètre interne de l'armure et le diamètre du cœur de câble est typiquement comprise entre 0.1 et 1 mm.

Selon une autre variante intéressante, le câble peut comprendre, entre le cœur du câble et l'armure, au moins un élément écartant l'armure du cœur du câble, et définissant un canal continu permettant une circulation de gaz entre l'armure et le cœur de câble. L'emploi de tels éléments écarteurs permet en outre d'obtenir le canal en assurant au besoin une contrainte importante de l'armure sur le cœur, donc sans nécessiter de jeu comme requis dans la variante précédente. En général, il est préférable d'employer plusieurs éléments écarteurs.

Un élément écartant l'armure du cœur du câble adapté peut par exemple être au moins un élément cylindrique disposé longitudinalement ou hélicoïdalement le long du cœur, ce qui permet d'obtenir le long de cet élément cylindrique un canal de drainage qui court sous l'armure tout au long du câble. Ces éléments écarteurs cylindriques sont typiquement de section circulaire, mais il peut également d'agir d'éléments de section rectangulaire ou autre. L'emploi d'éléments écarteurs permet notamment d'assurer le maintien de l'existence d'un canal dans des conditions de température importantes qui pourraient affecter sinon l'efficacité du canal de drainage, du fait des phénomènes de dilatation thermique au sein de la structure interne du câble.

Des éléments cylindriques écarteurs adaptés peuvent par exemple être des fils métalliques disposés le long du cœur entre le cœur et l'armure.

Selon un mode de réalisation particulier, l'élément cylindrique écartant le cœur de l'armure peut être au moins un deuxième cœur de câble, ce par quoi le câble armé est un câble multicœurs, les espaces entre les cœurs constituant alors des canaux de drainage selon l'invention.

Selon une variante intéressante, l'élément écarteur peut faire corps avec la surface du cœur de câble. Pour ce faire, la couche la plus extérieure du cœur de câble est avantageusement pourvue d'au moins un élément en saillie (et le plus souvent plusieurs de ces éléments) assurant le maintien d'un écartement du cœur et de l'armure, ménageant ainsi un espace servant de canal de drainage tel que défini ci-dessus entre le cœur et l'armure. Typiquement l'élément en saillie est une nervure (à savoir une protubérance linéaire) qui s'étend longitudinalement ou hélicoïdalement, et le plus souvent linéairement, sur toute la longueur de la surface externe du corps de câble. Cette nervure peut typiquement avoir une section en demi-lune (-ou plus généralement une section correspondant à une portion de disque) ou trapézoïdale mais d'autres géométries sont également envisageables dans la mesure où elles conduisent à la formation d'un canal adapté au drainage des produits de décomposition des matériaux employés dans le câble. Selon ce mode de réalisation intéressant, le corps de câble comporte plusieurs nervures du type précité sur sa surface en contact avec l'armure, et cette surface présente alors une structure géométrique cylindrique dont la section a schématiquement la forme d'une « pâquerette », avec un cœur sensiblement circulaire et des éléments en saillie, semblable à des « pétales » qui correspondent à la section des nervures. Les espaces managés entre les rainures constituent alors autant de canaux de drainage selon l'invention.

Selon une autre variante possible, éventuellement compatible avec la précédente, la surface du corps de câble en contact avec l'armure est munie d'au moins une gorge (rainure en creux, à l'inverse de la nervure en relief du mode précédent) qui s'étend sur toute la longueur du cœur de câble, longitudinalement ou hélicoïdalement, et le plus souvent linéairement. Dans ce cas, c'est l'espace interne de cette gorge présente dans la surface qui sert de canal de drainage selon l'invention. Selon cette variante, il est en général préférable que la surface du corps de câble en contact avec le cœur de câble soit munie de plusieurs gorges. Des gorges adaptées ont typiquement une section trapézoïdale, mais, là encore, d'autres géométries ne sont pas exclues, dans la mesure où elles conduisent à la formation d'un canal adapté au drainage des produits de décomposition des matériaux employés dans le câble.

Pour obtenir les géométries précitées, la gaine est typiquement extrudée autour du reste du cœur de câble, au moyen d'une extrudeuse munie d'une tête d'extrusion ayant le profilé correspondant.

Ainsi, lorsqu'un élément écarteur est mis en œuvre selon l'invention, cet élément écarteur peut notamment être :
- au moins un élément cylindrique disposé longitudinalement ou hélicoïdalement le long du cœur ; ou
- au moins une nervure sur la couche la plus extérieure du cœur de câble et qui s'étend longitudinalement ou hélicoïdalement sur toute la longueur de la surface externe du corps de câble ; ou
- la surface la plus externe du corps de câble en contact avec l'armure, lorsque cette surface est munie d'au moins une gorge qui s'étend sur toute la longueur du cœur de câble.

Quelle que soit la variante mise en œuvre, la géométrie des moyens assurant la présence d'un canal entre le cœur est l'armure est typiquement choisie de façon que l'armure apposée sur le cœur de câble présente une section sensiblement circulaire (la couche la plus externe du câble a alors typiquement une section circulaire elle aussi). A cet effet, lorsque l'invention emploie des éléments écarteurs entre le cœur et l'armure, ou bien des éléments en saillies de la couche la plus extérieure du cœur de câble et/ou des rainures dans cette couche, ces éléments sont le plus souvent suffisamment nombreux pour supporter la structure de l'armure et conserver une concentricité et l'obtention d'une couche externe de section circulaire.

### Le revêtement à base de matériau géopolymère

La couche composite qui revêt l'extérieur de l'armure d'un câble armé selon l'invention est à base d'un matériau géopolymère.

Au sens de la présente description, l'expression « matériau géopolymère » désigne un matériau solide comprenant du silicium (Si), de l'aluminium (Al), de l'oxygène (O) et au moins un élément choisi parmi le potassium (K), le sodium (Na), le lithium (Li), le césium (Cs) et le calcium (Ca), et de préférence choisi parmi le potassium (K), et le sodium (Na).

Le matériau géopolymère peut notamment être un matériau géopolymère aluminosilicate.

Le matériau géopolymère aluminosilicate peut être choisi parmi les poly(sialates) répondant à la formule (I) Mₙ(-Si-O-Al-O-)ₙ [(M)-PS] et ayant un rapport molaire Si/Al égal à 1, les poly(sialate-siloxos) répondant à la formule (II) Mₙ(-Si-O-Al-O-Si-O-)ₙ [(M)-PPS] et ayant un rapport molaire Si/Al égal à 2, les poly(sialate-disiloxos) répondant à la formule (III) Mₙ(-Si-O-Al-O-Si-O-Si-O)ₙ [(M)-PSDS] et ayant un rapport molaire Si/Al égal à 3, et d'autres poly(sialates) de rapport Si/Al > 3, les poly(sialates) précités comprenant un cation alcalin M choisi parmi K, Na, Li, Cs et l'un de leurs mélanges, et n désigne le degré de polymérisation.

Dans un mode de réalisation, le matériau géopolymère représente de 5 à 98% en poids environ, de préférence de 55 à 95% en poids environ, et de préférence encore de 65 à 90% en poids environ, par rapport au poids total de la couche composite.

Cette couche composite a typiquement une épaisseur allant de 0,2 à 3 mm environ, et de façon particulièrement préférée allant de 0,5 à 1 mm environ.

La couche composite présente par ailleurs de préférence une épaisseur sensiblement constante et constitue en général une enveloppe continue en surface de l'armure.

Par ailleurs, la couche composite est de préférence non poreuse.

La couche composite qui revêt l'extérieur de l'armure d'un câble armé selon l'invention est typiquement obtenue par enroulement autour de l'armure d'au moins un ruban de matériau fibreux, généralement non tissé, imprégné par une composition géopolymère. Selon certains modes de réalisation, la couche composite peut être issue de plusieurs rubans imprégnés superposés, par exemple 2 à 3 rubans superposés.

La couche composite comprend alors le matériau fibreux et au moins un matériau géopolymère obtenu à partir de la composition géopolymère, en général par séchage, géopolymérisation et/ou polycondensation de ladite composition géopolymère (processus désignés ici par « *durcissement »* de la composition géopolymère).

Une « composition géopolymère » au sens de la présente description est une composition, généralement liquide, apte à former par durcissement un matériau géopolymère solide. Les ingrédients de la composition géopolymère peuvent donc subir une polycondensation pour former ledit matériau géopolymère. La formation du matériau géopolymère à partir de la composition géopolymère s'effectue donc par une réaction interne et n'est par exemple pas le résultat d'un simple séchage, comme c'est généralement le cas pour des liants à base de silicates alcalins.

En effet, les matériaux géopolymères résultent d'une réaction de polycondensation minérale par activation alcaline, dite géosynthèse, par opposition aux liants traditionnels hydrauliques dans lesquels le durcissement est le résultat d'une hydratation des aluminates de calcium et des silicates de calcium.

### Le matériau fibreux

Le matériau fibreux employé selon l'invention pour revêtir l'armure est de préférence un matériau fibreux non tissé, qui a avantageusement une structure souple et flexible.

Ce matériau fibreux non tissé peut notamment être choisi parmi les matériaux cellulosiques, les matériaux à base de polymères organiques synthétiques, les fibres de verre, et un de leurs mélanges, et de préférence parmi les matériaux à base de polymères organiques synthétiques.

Les matériaux cellulosiques peuvent être choisis parmi le papier, en particulier le papier buvard ; les matériaux non tissés fabriqués à partir de cellulose fonctionnalisée ou non fonctionnalisée ; les matrices à structure alvéolaire et/ou fibreuse fabriquées à partir de fibres naturelles d'acétate de cellulose.

Les matériaux à base de polymères organiques synthétiques peuvent être choisis parmi les matériaux polymères à matrice poreuse et/ou fibreuse de polyoléfine(s), en particulier ceux choisis parmi les homo- et copolymères de propylène, les homo- et copolymères d'éthylène, les polyéthylènes haute densité (HDPE), les polyamides aromatiques (aramides), les polyesters, et un de leurs mélanges.

Selon un mode de réalisation intéressant de l'invention, le matériau fibreux non tissé est un polyéthylène téréphtalate (PET).

Le matériau fibreux non tissé présente de préférence un grammage allant de 50 à 120 g/cm² environ. Cela permet ainsi d'obtenir une couche composite suffisamment flexible pour pouvoir être manipulée facilement, et suffisamment robuste pour obtenir une bonne protection au feu.

Selon une forme de réalisation préférée de l'invention, le matériau fibreux non tissé représente de 2 à 95% en poids environ, de façon particulièrement préférée de 5 à 45% en poids environ, et encore plus préférentiellement de 10 à 35% en poids environ, par rapport au poids total de la couche composite.

### La composition géopolymère

La composition géopolymère employée pour imprégner le matériau fibreux est de préférence une composition géopolymère liquide.

La composition géopolymère employée est de préférence une composition géopolymère aluminosilicate.

La composition géopolymère de l'invention est de façon particulièrement préférée une composition géopolymère comprenant de l'eau, du silicium (Si), de l'aluminium (Al), de l'oxygène (O), et au moins un élément choisi parmi le potassium (K), le sodium (Na), le lithium (Li), le césium (Cs), et le calcium (Ca), et de préférence choisi parmi le potassium (K) et le sodium (Na).

La composition géopolymère peut en particulier comprendre au moins un premier aluminosilicate, au moins un premier silicate alcalin, de l'eau, et éventuellement une base alcaline.

### Le premier aluminosilicate

Le premier aluminosilicate peut être choisi parmi les métakaolins (i.e. kaolins calcinés), les cendres volantes (bien connues sous l'anglicisme « *fly ash* »), le laitier de haut fourneau (bien connu sous l'anglicisme « *blast furnace slag* »), les argiles gonflantes telles que la bentonite, les argiles calcinées, tout type de composé comprenant de l'aluminium et de la fumée de silice, les zéolithes, et un de leurs mélanges.

Parmi ces composés, les métakaolins sont préférés, notamment ceux commercialisés par la société Imérys.

Dans l'invention, l'expression « métakaolin » signifie un kaolin calciné ou un aluminosilicate déhydroxylé. Il est de préférence obtenu par déshydratation d'un kaolin ou d'une kaolinite.

La composition géopolymère peut comprendre de 5 à 50% en poids environ d'aluminosilicate, et de préférence de 10 à 35% en poids environ d'aluminosilicate, par rapport au poids total de la composition géopolymère.

La composition géopolymère peut comprendre en outre un deuxième aluminosilicate différent du premier aluminosilicate.

De préférence, la composition géopolymère comprend deux kaolins calcinés ayant des températures de calcination différentes.

Selon une forme de réalisation particulièrement préférée de l'invention, la composition géopolymère comprend un premier métakaolin choisi parmi les kaolins calcinés à une température T_{c1} d'au moins 650°C environ, et un deuxième métakaolin choisi parmi les kaolins calcinés à une température T_{c2} telle que T_{c2} - T_{c1} ≥ 100°C environ, au moins un premier silicate alcalin, de l'eau, et éventuellement une base alcaline. La composition géopolymère peut alors présenter des propriétés mécaniques améliorées, notamment en termes de flexibilité et de durabilité, tout en garantissant de bonnes propriétés de réaction et de résistance au feu.

Selon une forme de réalisation de l'invention, le premier métakaolin est un kaolin calciné à une température T_{c1} d'au moins 700°C environ, et de préférence d'au moins 725°C environ.

Selon une forme de réalisation préférée de l'invention, le premier métakaolin est un kaolin calciné à une température T_{c1} d'au plus 875°C environ, et de préférence d'au plus 825°C environ.

Le premier métakaolin peut comprendre au moins 20% en mole environ, et de préférence au moins 30% en mole environ d'oxyde d'aluminium (Al₂O₃), par rapport au nombre de moles total du premier métakaolin.

Le premier métakaolin peut comprendre au plus 60% en mole environ, et de préférence au plus 50% en mole environ d'oxyde d'aluminium (Al₂O₃), par rapport au nombre de moles total du premier métakaolin.

Le premier métakaolin peut comprendre au moins 35% en mole environ, et de préférence au moins 45% en mole environ d'oxyde de silicium (SiO₂), par rapport au nombre de moles total du premier métakaolin.

Le premier métakaolin peut comprendre au plus 75% en mole environ, et de préférence au plus 65% en mole environ d'oxyde de silicium (SiO₂), par rapport au nombre de moles total du premier métakaolin.

À titre d'exemples de premier métakaolin, on peut citer les métakaolins vendus par la société Imérys, notamment celui commercialisé sous la référence PoleStar^{®} 450.

Le premier métakaolin peut être choisi parmi les kaolins calcinés à T_{c1} telle que définie dans l'invention, pendant au moins 1 min environ, de préférence pendant au moins 10 min environ, de façon particulièrement préférée pendant une durée allant d'environ 30 min à 8h, et de façon plus particulièrement préférée pendant une durée allant d'environ 2h à 6h.

Le deuxième métakaolin est choisi de préférence parmi les kaolins calcinés à une température T_{c2} telle que T_{c2} - T_{c1} ≥ 150°C environ, de façon particulièrement préférée telle que T_{c2} - T_{c1} ≥ 200°C environ, et de façon plus particulièrement préférée telle que T_{c2} - T_{c1} ≥ 250°C environ.

Selon une forme de réalisation de l'invention, le deuxième métakaolin est un kaolin calciné à une température T_{c2} d'au moins 800°C environ, de préférence d'au moins 850°C environ, et de façon particulièrement préférée d'au moins 900°C environ.

Selon une forme de réalisation préférée de l'invention, le deuxième métakaolin est un kaolin calciné à une température T_{c2} d'au plus 1200°C environ, et de préférence d'au plus 1150°C environ.

Le deuxième métakaolin peut comprendre au moins 20% en mole environ, et de préférence au moins 30% en mole environ d'oxyde d'aluminium (Al₂O₃), par rapport au nombre de moles total du deuxième métakaolin.

Le deuxième métakaolin peut comprendre au plus 60% en mole environ, et de préférence au plus 50% en mole environ d'oxyde d'aluminium (Al₂O₃), par rapport au nombre de moles total du deuxième métakaolin.

Le deuxième métakaolin peut comprendre au moins 35% en mole environ, et de préférence au moins 45% en mole environ d'oxyde de silicium (SiO₂), par rapport au nombre de moles total du deuxième métakaolin.

Le deuxième métakaolin peut comprendre au plus 75% en mole environ, et de préférence au plus 65% en mole environ d'oxyde de silicium (SiO₂), par rapport au nombre de moles total du deuxième métakaolin.

À titre d'exemples de deuxième métakaolin, on peut citer les métakaolins vendus par la société Imérys, notamment celui commercialisé sous la référence PoleStar^{®} 200R.

Le deuxième métakaolin peut être choisi parmi les kaolins calcinés à T_{c2} telle que définie dans l'invention, pendant au moins 1 min environ, de préférence pendant au moins 5 min environ, de façon particulièrement préférée pendant une durée allant d'environ 10 min à 2h, et de façon plus particulièrement préférée pendant une durée allant d'environ 15 min à 1h.

Le rapport massique [premier métakaolin/deuxième métakaolin] dans la composition géopolymère va de préférence de 0,1 à 2 environ, de façon particulièrement préférée de 0,5 à 1,0 environ, et de façon plus particulièrement préférée est d'environ 1.

La composition géopolymère peut comprendre de 5 à 50% en poids environ, et de préférence de 10 à 35% en poids environ de premier et deuxième métakaolins, par rapport au poids total de la composition géopolymère.

### Le premier silicate alcalin

Le premier silicate alcalin peut être choisi parmi les silicates de sodium, les silicates de potassium, et l'un de leurs mélanges.

Les silicates alcalins commercialisés par la société Silmaco ou par la société PQ corporation sont préférés. Le premier silicate alcalin est de préférence un silicate de sodium.

Le premier silicate alcalin peut avoir un rapport molaire SiO₂/M₂O allant de 1,1 à 35 environ, de préférence de 1,3 à 10 environ, et de façon particulièrement préférée de 1,4 à 5 environ, avec M étant un atome de sodium ou de potassium, et de préférence un atome de sodium.

La composition géopolymère peut comprendre de 5 à 60% en poids environ, et de préférence de 10 à 50% en poids environ de premier silicate alcalin, par rapport au poids total de la composition géopolymère.

### Le deuxième silicate alcalin

La composition géopolymère peut comprendre en outre un deuxième silicate alcalin différent du premier silicate alcalin.

Le deuxième silicate alcalin peut être choisi parmi les silicates de sodium, les silicates de potassium, et l'un de leurs mélanges. Les silicates alcalins commercialisés par la société Silmaco ou par la société PQ Corporation sont préférés. Le deuxième silicate alcalin est de préférence un silicate de sodium.

Les premier et deuxième silicates alcalins peuvent avoir respectivement des rapports molaires SiO₂/M₂O et SiO₂/M'₂O tels que M et M', identiques, sont choisis parmi un atome de sodium et un atome de potassium, et de préférence un atome de sodium, et lesdits rapports ont des valeurs différentes, de préférence des valeurs telles que leur différence est d'au moins 0,3, de façon particulièrement préférée telles que leur différence est d'au moins 0,5, et de façon plus particulièrement préférée telles que leur différence est d'au moins 1,0.

Selon une forme de réalisation de l'invention, la composition géopolymère comprend :
- un premier silicate alcalin ayant un rapport molaire SiO₂/M₂O allant de 1,5 à 2,6 environ, et
- un deuxième silicate alcalin ayant un rapport molaire SiO₂/M'₂O supérieur à 2,6, de préférence allant de 2,8 à 4,5 environ, et de façon particulièrement préférée allant de 3,0 à 4,0 environ, étant entendu que M' est identique à M.

La composition géopolymère peut comprendre de 10 à 60% en poids environ, et de préférence de 20 à 50% en poids environ de premier et deuxième silicates alcalins, par rapport au poids total de la composition géopolymère.

Le rapport massique [premier silicate alcalin/deuxième silicate alcalin] dans la composition géopolymère va de préférence de 0,5 à 2,5, et de façon particulièrement préférée de 0,8 à 2,0.

### La base alcaline

La base alcaline peut être de l'hydroxyde de sodium, ou de l'hydroxyde de potassium, et de préférence de l'hydroxyde de sodium.

La composition géopolymère peut être exempte de base alcaline. Cela permet ainsi d'améliorer la manipulation de la composition géopolymère, en particulier lors de la préparation d'un câble.

Le rapport massique matières solides/eau dans ladite composition géopolymère détermine la cinétique de solidification (prise) de la composition.

La composition géopolymère peut comprendre de 35% à 80% en poids environ, et de façon particulièrement préférée de 40% à 70% en poids environ, de matières solides (silicate alcalin(s), aluminosilicate(s) et base alcaline), par rapport au poids total de ladite composition géopolymère.

La composition géopolymère peut comprendre en outre un ou plusieurs additifs choisis parmi:
- un colorant,
- des fibres minérales, notamment choisies parmi les fibres d'alumine,
- un additif à structure polymère, notamment choisi parmi les fibres de polyoléfine telles que les fibres de polypropylène, de polyéthylène haute densité (HDPE), les aramides, et les fibres techniques de verre enduites de silicone ou d'un polymère organique de type polyéthylène ; un copolymère de styrène-butadiène (SBR) ; un copolymère de styrène-butadiène-éthylène (EBS) ; les dérivés des copolymères de styrène-éthylène, notamment ceux commercialisés par Kraton tels qu'un copolymère de styrène-éthylène-butylène-styrène (SEBS), un copolymère de styrène-butadiène-styrène (SBS), un copolymère de styrène-isoprène-styrène (SIS), un copolymère de styrène-propylène-éthylène (EPS) ou un copolymère de styrène-éthylène-propylène-styrène (SEPS) ; un copolymère d'éthylène et d'acétate de vinyle (EVA), un polyorganosiloxane réticulé (e.g. à l'aide d'un péroxyde) ; du polyéthylène éventuellement sous forme de poudre ; des lignosulfonates ; de l'acétate de cellulose ; d'autres dérivés de la cellulose ; une huile silicone de faible viscosité (e.g. de l'ordre de 12500 cPo) ; et une huile polyéthylène,
- un composé accélérant la prise en masse, notamment choisi parmi le sulfate d'aluminium, les aluns (e.g. sulfate double d'aluminium et de potassium), le chlorure de calcium, le sulfate de calcium, le sulfate de calcium hydraté, l'aluminate de sodium, le carbonate de sodium, le chlorure de sodium, le silicate de sodium, le sulfate de sodium, le chlorure de fer (III), et les lignosulfonates de sodium,
- un agent retardant la prise en masse, notamment choisi parmi l'ammonium, les métaux alcalins, les métaux alcalino-terreux, le borax, les lignosulfonates et en particulier les sels de métaux de lignosulfonates de calcium, les celluloses telles que la carboxyméthyl hydroéthyl cellulose, les lignines sulfoalkylées telles que par exemple la lignine sulfométhylée, les acides hydroxycarboxyliques, les copolymères de sels d'acide 2-acrylamido-2-méthylpropane sulfonique et d'acide acrylique ou d'acide maléique, et les sels saturés,
- une charge inerte, notamment choisi parmi le talc, les micas, les argiles déshydratées, et le carbonate de calcium,
- un amidon,
- un plastifiant de l'amidon, notamment choisi parmi un stéarate de métal, un polyéthylène glycol, un éthylène glycol, un polyol comme le glycérol, le sorbitol, le mannitol, le maltitol, le xylitol ou un oligomère de l'un de ces polyols, un sucrose comme le glucose ou le fructose, un plastifiant contenant des groupes amides, et tout type de plastifiant à base de polysaccharide(s) modifié(s),
- un dérivé de la cellulose,
- un matériau carboné expansé tel qu'un graphite expansé.

Le colorant est de préférence un colorant liquide à température ambiante (i.e. à 18-25°C).

La composition géopolymère peut comprendre de 0,01 à 15% en poids environ d'additif(s), et de préférence de 0,5 à 8% en poids environ d'additif(s), par rapport au poids total de la composition géopolymère.

### La préparation de la composition géopolymère

Une composition géopolymère utile selon l'invention peut typiquement être préparée selon une étape (E) de mélange dudit premier aluminosilicate avec ledit premier silicate alcalin, l'eau, et éventuellement la base alcaline.

Cette étape de mélange est généralement effectuée à un pH élevé, notamment variant de 10 à 13.

Cette étape de mélange comprend de préférence les sous-étapes suivantes :
(E₁) préparation d'une solution aqueuse du premier silicate alcalin ; et
(E₂) mélange du premier aluminosilicate sous forme de poudre avec la solution aqueuse de silicate alcalin préparée à la sous-étape (E₁).

La solution aqueuse du premier silicate alcalin peut être préparée en mélangeant du dioxyde de silicium SiO₂ ou un silicate alcalin avec une base MOH dans laquelle M est K ou Na.

Le dioxyde de silicium SiO₂ peut être choisi parmi la fumée de silice (i.e. silice pyrogénée), le quartz, et leurs mélanges.

La sous-étape (E₁) peut être effectuée en dissolvant la base dans de l'eau, entraînant un dégagement de chaleur (réaction exothermique), puis en ajoutant la silice (ou le silicate alcalin). La chaleur dégagée accélère alors la dissolution de la silice (ou du silicate alcalin) lors de la sous-étape (E₁), et du premier aluminosilicate lors de la sous-étape (E₂).

Lorsqu'on emploie un deuxième aluminosilicate et/ou un deuxième silicate alcalin, l'étape (E) de préparation de la composition géopolymère peut comprendre le mélange dudit premier aluminosilicate et éventuellement dudit deuxième aluminosilicate, avec ledit premier silicate alcalin, éventuellement ledit deuxième silicate alcalin, de l'eau, et éventuellement la base alcaline.

L'étape (E) comprend de préférence le mélange des premier et deuxième métakaolins, avec le premier silicate alcalin et éventuellement le deuxième silicate alcalin, de l'eau, et éventuellement une base alcaline.

Selon une forme de réalisation préférée, l'étape (E) comprend les sous-étapes suivantes :
(Ea) mélange des premier et deuxième silicates alcalins, notamment sous agitation ;
(Eb) éventuel ajout d'une base alcaline, notamment en maintenant l'agitation ; et

(Ec) l'ajout des premier et deuxième métakaolins, notamment en maintenant l'agitation.

À l'issue de l'étape (E), notamment à l'issue de la sous-étape (E2) ou (E c) lorsqu'elles sont mises en œuvre, on obtient préférentiellement une solution fluide et homogène.

À l'issue de l'étape (E), la composition géopolymère peut comprendre de 35% à 80% en poids environ, et de façon particulièrement préférée de 40% à 70% en poids environ, de matières solides (silicate alcalin(s), aluminosilicate(s) et base alcaline), par rapport au poids total de ladite composition géopolymère.

Un tel rapport massique permet d'avoir une composition géopolymère assez fluide pour permettre sa manipulation, et dont la cinétique de solidification est assez lente pour permettre la formation d'une couche de câble telle que définie ci-après.

Le rapport massique matières solides/eau dans ladite composition géopolymère peut permettre de déterminer la cinétique de solidification de ladite composition géopolymère.

Après l'étape (E) de préparation de la composition géopolymère, et avant son imprégnation sur le matériau fibreux, la composition géopolymère peut être chauffée, notamment à une température allant de 55°C à 95°C environ, et de façon particulièrement préférée de 70°C à 90°C environ. Cela permet ainsi de faciliter l'étape d'imprégnation.

### L'application du ruban imprégné autour de l'armure

Le revêtement du ruban imprégné autour de l'armure est typiquement effectué par un enroulement dudit ruban imprégné autour de l'armure, cet enroulement autour de l'armure étant effectué après application de l'armure autour du cœur de câble.

Cet enroulement du ruban autour du cœur de câble revêtu de l'armure, qui vise en général à recouvrir l'armure sur l'ensemble de sa longueur, est typiquement effectué :
- selon l'axe longitudinal du câble (qui est aussi l'axe longitudinal du cylindre formé par l'armure), à savoir avec un enroulement du ruban autour de l'armure avec l'axe longitudinal du ruban parallèle à l'axe longitudinal du câble, le ruban étant alors replié autour de l'armure dans le sens de sa largeur (le ruban se referme alors sur l'armure avec en général peu de recouvrement des faces du ruban l'une sur l'autre, typiquement avec des zones de recouvrement de de 10 à 20% environ) ;
   ou bien
- selon un enroulement hélicoïdal, à savoir avec un enroulement du ruban autour de l'armure avec l'axe longitudinal du ruban qui n'est ni parallèle ni perpendiculaire à l'axe longitudinal du câble, le ruban formant alors autour de l'armure une hélice (le ruban revêtant alors l'armure avec en général peu de recouvrement des faces du ruban d'une spire de l'hélice à la suivante typiquement avec des zones de recouvrement de de 10 à 20% environ).

L'enroulement peut être effectué manuellement ou de façon automatisée, et de préférence de façon automatisée.

Lorsque l'enroulement du ruban autour de l'armure est effectué selon l'axe longitudinal du câble, il est avantageusement mis en œuvre en faisant passer le ruban imprégné dans un dispositif de resserrement ou un dispositif de conformation de ruban amorçant son repliement autour du câble dans le sens de sa largeur (dispositif désigné dans ce qui suit par « trompette »). Le cœur de câble revêtu par l'armure passe alors également dans le dispositif de resserrement, ce qui permet d'enrouler en continu le ruban imprégné autour de l'armure et ainsi de former la couche composite sur l'armure.

Lorsque l'enroulement du ruban autour de l'armure est hélicoïdal, il est avantageusement conduit en enroulant le ruban autour du câble revêtu de l'armure avec l'axe longitudinal du ruban formant un angle typiquement entre 20 et 70° avec l'axe longitudinal du câble et en entraînant le câble en rotation et en translation pour assurer l'enroulement continu du ruban sous la forme d'une hélice autour du câble.

### Gaine externe de protection

De préférence, la couche composite à base de géopolymère qui revêt l'extérieur de l'armure est une couche interne du câble selon l'invention.

Selon l'invention, on entend par « couche interne », une couche qui ne constitue pas la couche la plus externe du câble.

Avantageusement, une gaine externe de protection est déposée autour de la couche composite. La gaine externe de protection peut notamment permettre d'assurer l'intégrité mécanique de la couche composite.

Selon ce mode de réalisation, le câble armé selon l'invention comprend alors le cœur de câble selon l'invention ; autour dudit cœur de câble une armure métallique cylindrique revêtue extérieurement par une couche composite à base d'un matériau géopolymère ; et il comporte en outre autour de ladite composition composite au moins une gaine de protection qui est généralement la couche la plus externe du câble.

L'application de la gaine de protection autour de la composition composite qui revêt l'armure peut typiquement être effectuée par extrusion, notamment à une température allant de 140°C à 195°C environ.

La gaine externe de protection est de préférence une couche électriquement isolante.

La gaine externe de protection est de préférence réalisée en un matériau exempt d'halogène. Elle peut être réalisée classiquement à partir de matériaux retardant la propagation de la flamme ou résistant à la propagation de la flamme.

La gaine externe de protection peut comprendre au moins un polymère organique ou inorganique.

Le choix du polymère organique ou inorganique n'est pas limitatif et ceux-ci sont bien connus de l'homme du métier.

Selon une forme de réalisation préférée de l'invention, le polymère organique ou inorganique est choisi parmi les polymères réticulés et non réticulés.

Le polymère organique ou inorganique peut être un homo- ou un co-polymère ayant des propriétés thermoplastiques et/ou élastomères.

Les polymères inorganiques peuvent être des polyorganosiloxanes.

Les polymères organiques peuvent être des polyuréthanes ou des polyoléfines.

Les polyoléfines peuvent être choisies parmi les polymères d'éthylène et de propylène. A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), les terpolymères d'éthylène et de propylène (EPT) tels que par exemple les terpolymères d'éthylène propylène diène monomère (EPDM) ou un de leurs mélanges.

Le polymère de la gaine externe de protection est de préférence un polymère organique, de préférence encore un polymère d'éthylène, et de préférence encore un copolymère d'éthylène et d'acétate de vinyle, un polyéthylène linéaire basse densité, ou un de leurs mélanges.

La gaine externe de protection peut comprendre en outre une charge minérale ignifugeante hydratée. Cette charge minérale ignifugeante hydratée agit principalement par voie physique en se décomposant de manière endothermique (e.g. libération d'eau), ce qui a pour conséquence d'abaisser la température de la gaine et de limiter la propagation des flammes le long du câble. On parle notamment de propriétés de retard à la flamme, bien connues sous l'anglicisme « *flame retardant ».*

La charge minérale ignifugeante hydratée peut être un hydroxyde métallique tel que l'hydroxyde de magnésium ou le trihydroxyde d'aluminium.

La gaine externe de protection peut comprendre en outre une charge inerte, notamment choisi parmi le talc, les micas, les argiles déshydratées et un de leurs mélanges.

### Brève description des dessins

Les dessins annexés illustrent des modes de réalisation possibles de l'invention :
[Fig. 1] la Figure 1 représente une vue schématique en coupe d'un exemple possible de câble armé selon l'invention.
[Fig. 2] La Figure 2 représente une vue schématique en coupe d'un autre exemple possible de câble armé selon l'invention.
[Fig. 3] La Figure 3 représente une première variante de la Figure 2.
[Fig. 4] La Figure 4 représente une deuxième variante possible de la Figure 2.

Seuls les éléments essentiels pour la compréhension de l'exposé ont été représentés de manière schématique sur ces figures, sans respect de l'échelle.

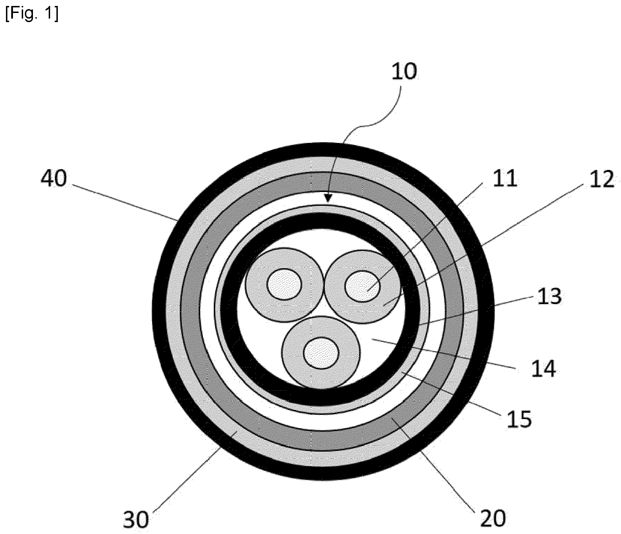

La Figure 1 est une vue schématique en coupe d'un câble armé comprenant un cœur de câble 10 constitué par trois éléments conducteurs 11 revêtus chacun par une couche isolante 12, ces trois éléments conducteurs étant enfermée dans une gaine 13 renfermant également un bourrage 14 enrobant les éléments conducteurs isolés, et qui peut optionnellement être revêtue par un matelas 15.

Le cœur 10 est entouré par une armure 20 de diamètre interne plus important que le diamètre externe du cœur, ce par quoi un vide existe entre le cœur 10 et l'armure 20 (correspondant à la zone annulaire en blanc sur la Figure entre le cœur 10 et l'armure 20). Il existe donc un jeu entre le cœur 10 et l'armure 20.

L'armure 20 est recouverte par une couche composite 30 à base d'un matériau géopolymère, elle-même recouverte par une gaine de protection 40.

Lorsque le câble armé de la Figure 1 est soumis à des températures importantes, notamment à un feu, les constituants (polymères entre autres) de la couche 12, de la gaine 13 et du bourrage 14 tendent à fondre et à se décomposer pour former des liquides et des gaz à l'intérieur de l'armure 20. Les gaz engendrés peuvent circuler librement dans l'espace libre laissé entre le cœur 10 et l'armure 20, évitant ainsi l'apparition de surpression et la couche 30 assure de surcroît une étanchéité de l'armure, ce par quoi les composés générés restent à l'intérieur de l'armure, sans engendrer de gouttelettes ou particules incandescente vers l'extérieur du câble.

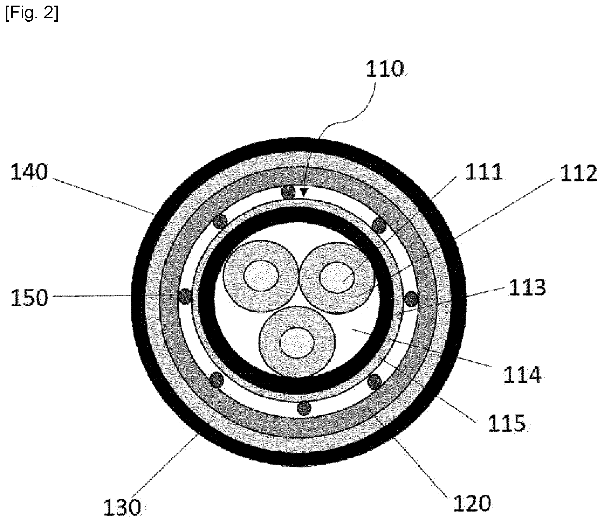

La Figure 2, est une vue schématique en coupe d'un câble armé selon un autre mode de réalisation il comprend un cœur de câble 110 similaire à celui du cœur 10 de la Figure 1, constitué par trois éléments conducteurs 111 revêtus chacun par une couche isolante 112, ces trois éléments conducteurs étant enfermée dans une gaine 113 renfermant également un bourrage 114 enrobant les éléments conducteurs isolés, et qui peut optionnellement être revêtue par un matelas 15.

Le cœur 110 est entouré par une armure 120 de diamètre interne plus important que le diamètre externe du cœur, ce par quoi un vide existe entre le cœur 110 et l'armure 120 (correspondant à la zone annulaire en blanc sur la Figure entre le cœur 10 et l'armure 120).

L'armure 120 est recouverte par une couche composite 130 à base d'un matériau géopolymère, elle-même recouverte par une gaine de protection 140.

Par rapport au câble de la Figure 1, le câble de la figure 2 comporte en outre des éléments écarteurs cylindriques 150 dans la zone annulaire entre le cœur et l'armure, qui maintiennent un écart entre le cœur 110 et l'armure 120.

Lorsque le câble armé de la Figure 2 est soumis à des températures importantes, les gaz et liquides issus de la dégradation des constituants de la couche 112, de la gaine 113 et du bourrage 114 sont maintenus à l'intérieur de l'armure comme dans le cas de la Figure 1 et ce avec d'autant plus d'efficacité que les éléments écarteurs 150 assure un maintien de l'existence d'un canal de drainage des produits de décomposition

Sur le schéma de la Figure 2, les éléments écarteurs 150 sont des éléments cylindriques extérieurs à la gaine 113. Alternativement, on peut employer une gaine extrudée munie de nervures (en relief), assurant le même effet que les éléments écarteurs 150, ou bien des gorges en creux qui forment des canaux sous la surface de contact entre le cœur et l'armure.

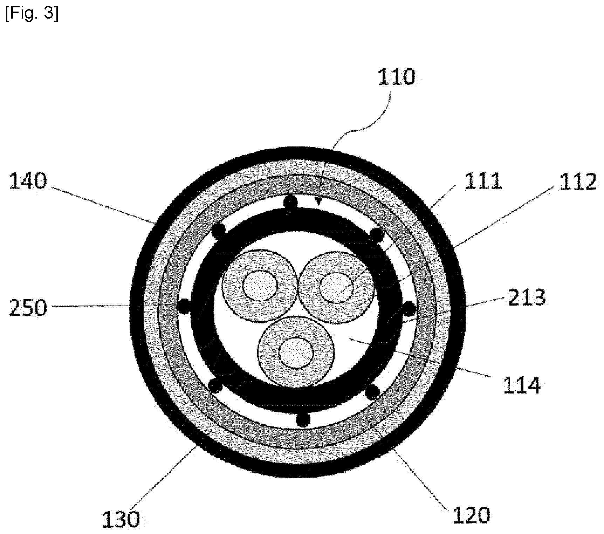

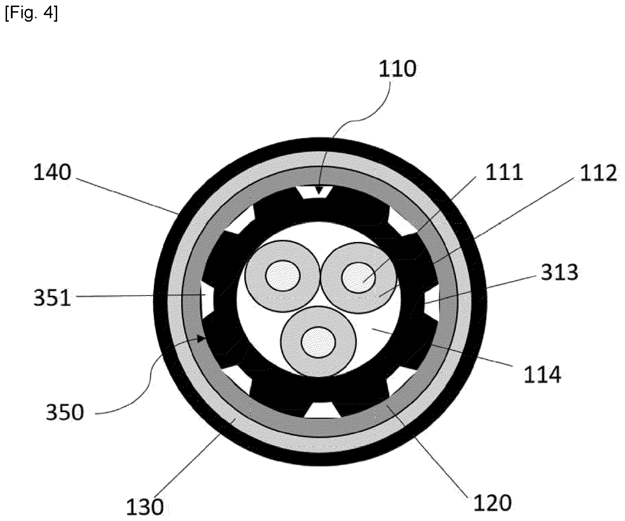

Les Figure 3 et 4 illustrent des variantes possibles correspondantes.

Ces Figures 3 et 4 correspondent à la Figure 2 (sans le matelas optionnel 115) et où la gaine 113 et les éléments écarteurs 150 sont remplacés par une gaine ayant une géométrie particulière :
- la gaine 213 de la Figure 3 est un exemple de gaine avec une géométrie « en pâquerette » telle qu'évoquée plus haut dans la présente description ; cette gaine est munie de nervures en relief 250, de section circulaire sur le schéma (d'autres géométries étant envisageables, notamment rectangulaire ou en demi-lune) ;
- la gaine 313 est, à l'inverse, munie de gorges en creux. Chaque zone 350 de la gaine 313 entre deux gorges 351 joue un rôle d'élément écarteur similaire aux nervures en relief 250 de la figure 3

Dans les deux cas, la présence des éléments écarteurs (à savoir respectivement les nervures 250 ou les zones 350) définissent des canaux de drainage selon l'invention : les zones en blanc sur les Figures 3 et 4 entre l'armure 120 et la gaine 213 ou 313.

### EXEMPLE

Un câble armé selon l'invention (Cable 1), correspondant au schéma de la Figure 1 (sans le matelas 15) a été testé dans les conditions de la norme EN50399.

Ce Câble 1 a un cœur de câble constitué de 12 conducteurs de cuivre (chacun de section : 2.5² et isolé) entouré par une épaisseur de 1,3 mm de matériau HFFR (Halogen Free Flame Retardant) c'est-à-dire en un matériau non halogéné à la propriété de retard à la flamme.

Ce cœur de câble a été revêtu par une armure d'acier avec une faible contrainte laissant entre l'armure et le cœur un espace propre à véhiculer un gaz. L'armure a été recouverte par une composition composite appliquée en déposant hélicoïdalement un ruban imprégné de composition géopolymère sur la surface de l'armure. Enfin, une gaine externe a été déposée par extrusion sur la couche composite.

A titre de comparaison, un câble témoin (Câble 2) a été testé dans les mêmes conditions. Il présente mêmes caractéristiques que le Câble 1, reportées dans le tableau ci-dessous, à la différence qu'il ne présente pas de canal de drainage selon l'invention : l'armure dans le Cable 1 est accolée de façon solidaire et sans jeu sur le cœur du câble

**[Tableau 1]**

| | **Cable 1** | **Cable 2 (comparatif)** |
|---|---|---|
| Espace entre l'armure et le cœur | **OUI** | **NON** |
| Couche composite : | | |
| • Ruban employé | PET | PET |
| • épaisseur du ruban (mm) | 0.45 | 0.45 |
| • épaisseur de la couche composite obtenue (mm) | 0.71 | 0.75 |
| Gaine de protection externe : HFFR | HFFR | HFFR |
| Epaisseur (mm) | 2.63 | 2.60 |

Les tests effectués sur les deux câbles, reportés respectivement dans les tableaux 2 et 3 ci-dessous, montrent que le Cable 1 selon l'invention répond aux exigences de la norme EN50399 (classifié en catégorie d0), alors que le câble témoin C2 est classifié en catégorie d2.

**[Tableau 2]**

| **CABLE 1** | **Résultats** | **Catégorie** |
|---|---|---|
| **Pic PHRR (kW)** | 7,81 | **B2ca** |
| **Temps d'atteinte du pic (s)** | 861 | |
| **THR (MJ)** | 4,34 | |
| **FIGRA (W/s)** | 17,49 | |
| **FS (« Flame Spread ») (m)** | 0.28 | |
| **Gouttelettes enflammée** | NON | **d0** |
| **Pic SPR (m²/s)** | 0,00 | **s1** |
| **Temps d'atteinte du pic (s)** | 1500 | |
| **TSP (m²)** | 0.31 | |

**[Tableau 3]**

| **CABLE 2** | **Résultats** | **Catégorie** |
|---|---|---|
| **Pic PHRR (kW)** | 8,10 | **B2ca** |
| **Temps d'atteinte du pic (s)** | 1002 | |
| **THR (MJ)** | 4,9 | |
| **FIGRA (W/s)** | 16,24 | |
| **FS (« Flame Spread ») (m)** | 0.43 | |
| **Gouttelettes enflammée** | **>10s** | **d2** |
| **Pic SPR (m²/s)** | 0,02 | **s1** |
| **Temps d'atteinte du pic (s)** | 1074 | |
| **TSP (m²)** | 7,94 | |

Dans les tableaux 2 et 3 :
HRR correspond à l'expression anglophone Heat Release Heat qui renseigne sur le débit calorifique ;
THR correspond à l'expression anglophone Total Heat Release qui renseigne sur la quantité de chaleur lors de la combustion ;
FIGRA correspond à l'expression anglophone Fire Growth Rate qui renseigne sur la vitesse de croissance du feu
FS = (flamme spread) correspond à la propagation de flamme
SPR correspond à l'expression anglophone Smoke Production Rate qui renseigne sur la vitesse de production de fumée
TSP correspond à l'expression anglophone Total Smoke Production qui renseigne sur la quantité totale de fumée produite

## Revendications

1. Câble armé comprenant un cœur de câble (10 ; 110) incluant au moins un élément électriquement conducteur allongé (11 ;111) revêtu par une couche isolante (12 ; 112), et au moins une armure métallique cylindrique (20 ; 120) autour dudit cœur de câble, **caractérisé en ce que** :
- le câble comporte, au sein de l'espace interne de l'armure métallique, au moins un canal permettant à un gaz de circuler tout au long dudit espace interne ; et
- l'armure métallique est revêtue extérieurement par une couche composite (30 ; 130) à base d'un matériau géopolymère.

2. Câble armé selon la revendication 1, où l'armure (20 ; 120) a un diamètre interne plus élevé que celui du cœur de câble(10 ; 110) qu'il contient.

3. Câble armé selon la revendication 2, où l'armure (20 ; 120) est placée de façon non ajustée autour du cœur de câble (10 ; 110), avec de préférence une différence entre le diamètre interne de l'armure et le diamètre du cœur de câble comprise entre 0.1 mm et 1 mm

4. Câble armé selon la revendication 2, qui comprend entre le cœur du câble (10 ; 110) et l'armure (20 ; 120), au moins un élément (150 ; 250 ;350) écartant l'armure du cœur du câble et définissant un canal continu permettant une circulation de gaz entre l'armure et le cœur de câble.

5. Câble armé selon la revendication 4, où l'élément écarteur est
- au moins un élément cylindrique (150) disposé longitudinalement ou hélicoïdalement le long du cœur ; ou
- au moins une nervure (250) sur la couche la plus extérieure du cœur de câble qui s'étend longitudinalement ou hélicoïdalement sur toute la longueur de la surface externe du corps de câble ; ou
- la surface la plus externe du corps de câble en contact avec l'armure (350), ladite surface étant munie d'au moins une gorge (351) qui s'étend sur toute la longueur du cœur de câble.

6. Cable armé selon la revendication 4 ou 5, où la couche la plus extérieure du cœur de câble est pourvue d'au moins un élément en saillie (250) assurant le maintien d'un écartement du cœur et de l'armure, de préférence une nervure qui s'étend longitudinalement ou hélicoïdalement sur toute la longueur de la surface externe du corps de câble

7. Cable armé selon la revendication 4, où la surface du corps de câble en contact avec l'armure est munie d'au moins une gorge (351) qui s'étend sur toute la longueur du cœur de câble, longitudinalement ou hélicoïdalement.

8. Câble armé selon l'une des revendications 1 à 5, où la couche composite (30 ; 130) à base de matériau géopolymère est obtenue par enroulement d'un ruban de matériau fibreux imprégné avec une composition géopolymère autour de l'armure.

9. Câble armé selon la revendication 6 ou 7, où la composition géopolymère est une composition géopolymère aluminosilicate.

10. Câble armé selon l'une quelconque des revendications précédentes, où le câble comprend en outre, autour de la composition composite à base de matériau géopolymère qui revêt l'armure, au moins une gaine de protection (40 ; 140).
